# EUROPEAN PATENT APPLICATION

(11) **EP 1 522 711 A2**
(43) Date of publication of application: **13.04.2005**
(21) Application number: 04104956.0
(22) Date of filing: 08.10.2004
(51) Int. Cl.: F02K 9/24, F02K 9/10

(54) **Method of distributing propellant inside a solid-propellant casing, and tool for implementing such a method**

(30) Priority: 10.10.2003 IT TO20030799
(71) Applicant: AVIO S.p.A., 10135 TORINO (IT)
(72) Inventor: Milieni, Antonella, 00155, ROMA (IT); Sessa, Dario, 00037, SEGNI (IT); Spinosa, Salvatore, ROMA, 00100 (IT); Zarra, Gerardo, 00034, COLLEFERRO (IT); Vincenzi, Vincenzo, 00037, SEGNI (IT)
(74) Representative: Jorio, Paolo, Dr. Ing.

(57) **Abstract**

A tank (1) containing a solid propellant (2) defining a combustion cavity (13) communicating externally through an end opening (10) of the tank is produced using a tool (12) having a rigid, strip-down plug (23), which is larger transversely than the opening, and is defined by a hollow central tubular locating body (44), and by a number of lateral forming bodies or fins (43) connectable releasably to and radiating from the tubular locating body (44); the plug being assembled inside the tank, after successively inserting the forming bodies and the tubular locating body, and by releasably locking the forming bodies by means of a hydraulic or mechanical device housed partly in the tubular locating body.

## Description

The present invention relates to a method of distributing propellant inside a casing of a solid-propellant tank, in particular for a rocket.

As is known, a rocket comprises a thermally protected, substantially cylindrical tank containing solid propellant; a propellant ignition device; and an end nozzle extending through an end opening in the tank, and which generates propulsive thrust upon combustion of the propellant.

The amount of propulsive thrust at ignition varies according to the propellant combustion rate, which in turn depends on distribution of the propellant inside the tank. Thrust is therefore controlled by shaping the ignition-exposed combustion surface of the propellant, and in particular by forming, in the solid propellant, facing the end opening, a contoured cavity shaped and sized to obtain desired combustion rates, according to the specific application.

The contoured cavity is normally formed using a rigid mandrel complementary in shape to that of the desired cavity. The mandrel is inserted inside the tank through the end opening engaged, in use, by the nozzle; once the mandrel is inserted, the propellant is poured into the tank and heated until it sets; and the mandrel is then withdrawn through the same end opening, leaving an impression of the desired contoured cavity inside the propellant.

Though widely used, the above method is unsatisfactory, by not allowing the formation of cavities of any shape, by which to arbitrarily vary the propellant combustion rate and, therefore, the propulsive thrust of the engine. This is mainly due to the cavity having to be of such a size and shape as to fit within an ideal cylindrical surface coaxial with the tank axis and of a maximum diameter smaller than the diameter of the end opening, so that the mandrel can be withdrawn from the propellant. For the same reason, the mandrel must, among other things, have no underside recesses, and must be withdrawable through the end opening.

It is an object of the present invention to provide a method of distributing propellant inside a solid-propellant casing, designed to provide a straightforward, low-cost solution to the above problems.

According to the present invention, there is provided a method of distributing propellant inside a solid-propellant casing having an end opening; the method comprising the steps of pouring the propellant inside said casing, and setting the propellant to form a cavity communicating with said end opening; said cavity being formed using a rigid, strip-down forming member comprising at least one locating member, and a number of forming bodies separate from one another and from the locating member; the method comprising the steps of stripping down the forming bodies and the locating member outside the casing; successively inserting the forming bodies and the locating member inside said casing through said end opening; positioning the locating member and the forming bodies inside said casing; releasably locking the locating member with respect to the casing, and the forming bodies with respect to the locating member, prior to pouring in said propellant; and, once the propellant has set, stripping down the rigid forming member, and successively withdrawing the locating member and the forming bodies through said end opening.

In the method as defined above, said locating member is preferably inserted after all the forming bodies have been inserted inside said casing.

The present invention also relates to a tool for filling a solid-propellant tank.

According to the present invention, there is provided a tool for filling a solid-propellant tank using the method as claimed in any one of Claims 1 to 18; the tool comprising a locating member extending along an axis and which is inserted inside a substantially cylindrical casing of said tank through an end opening in the casing; a number of forming bodies separate from one another and from said locating member; releasable connecting means connectable to said casing to keep said locating member, in use, in a position coaxial with an axis of said tank; and releasable positioning and retaining means for releasably positioning and retaining said forming bodies about said locating member and in respective angular work positions, to form a forming body of outer radial dimensions greater than those of said end opening.

A non-limiting embodiment of the invention will be described by way of example with reference to the accompanying drawings, in which:
Figure 1 shows a section, with parts removed for clarity, of a tank filled with solid propellant defining an inner combustion chamber;
Figure 2 shows a larger-scale section along line II-II in Figure 1;
Figure 3 shows a section, with parts removed for clarity, of a tank filling tool in accordance with the teachings of the present invention;
Figure 4 shows a larger-scale section along line IV-IV in Figure 3;
Figure 5 shows a larger-scale, partial section along line V-V in Figure 3;
Figure 6 shows a variation of a detail in Figure 5;
Figures 7 to 16 show steps in the method of distributing propellant inside the tank using the tool and in accordance with the present invention.

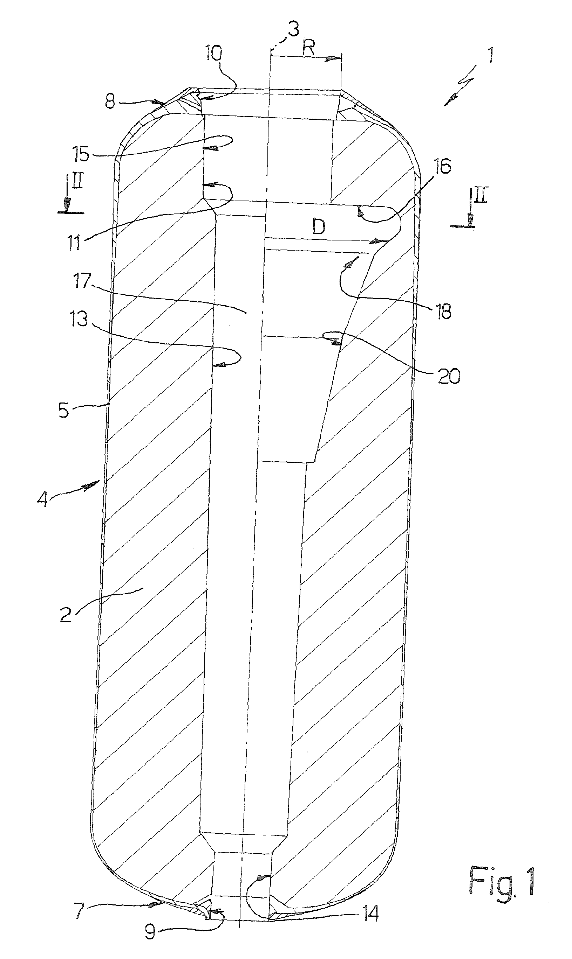

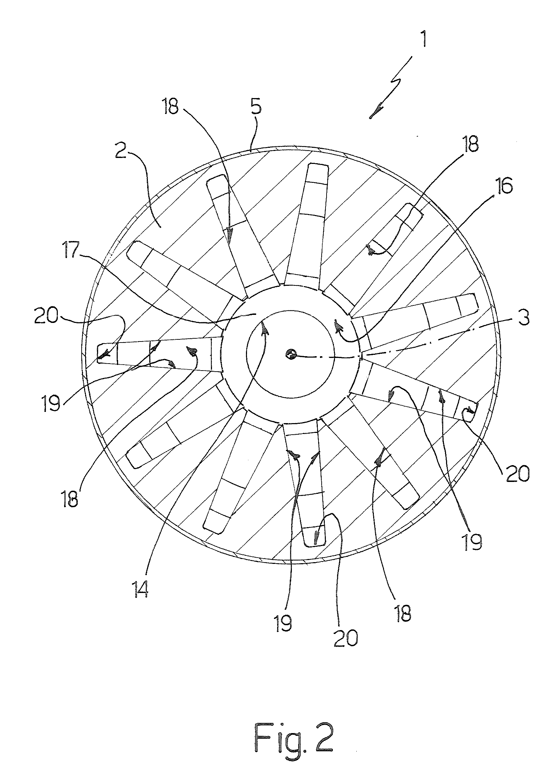

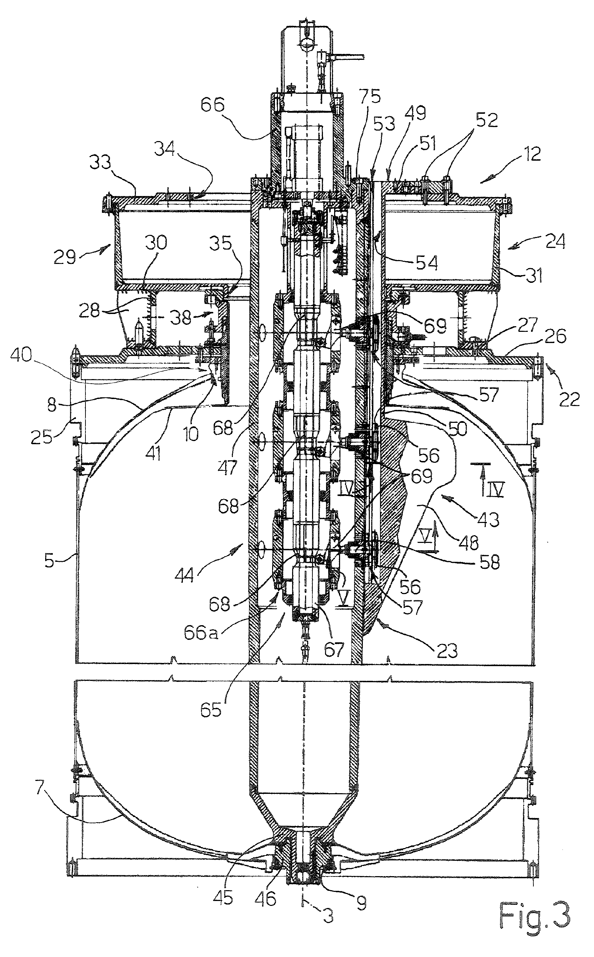

Number 1 in Figures 1 and 2 indicates a cylindrical tank for solid propellant 2 for a rocket (not shown). Tank 1 has a longitudinal axis 3, and comprises a thermally protected casing 4 made of metal or composite material, and in turn comprising a cylindrical intermediate lateral wall 5 coaxial with axis 3, and two end covers 7 and 8. Cover 7 has a propellant ignition opening 9 coaxial with axis 3, and cover 8 has an opening 10, also coaxial with axis 3, for inserting the propellant, for housing a propulsion nozzle (not shown), and for inserting/withdrawing part of a fixture or tool 12 (Figures 3 and 7-16), described in detail later on, for distributing propellant 2 as required inside tank 1. In the example described, tool 12 provides for distributing the propellant so that propellant 2 defines an axial through cavity 13 comprising two end portions 14 and 15, each extending from a relative cover 7, 8, coaxially with relative opening 9, 10, and of which portion 15 comprises a number of dead channels 11 spaced angularly about axis 3. Cavity 13 also comprises an intermediate star-shaped portion 16 communicating with end portions 14 and 15 (Figure 1). As shown, particularly in Figure 2, star-shaped portion 16 comprises a central space 17, and a number of lateral cavities or recesses 18 radiating and equally spaced angularly about axis 3. Each lateral recess 18 is bounded by flat radial surfaces 19 converging with each other towards cylindrical wall 5, and by a convex lateral surface 20 (Figure 1). Lateral surface 20 is located at a distance D (Figure 1), from axis 3, which increases towards cover 8, and, close to cover 8, reaches a maximum value greater than the radius R of opening 10 and comparable with the inside diameter of cylindrical wall 5.

As shown in Figure 3, cavity 13 is formed using tool 12, which comprises a locating and support assembly 22 connected integrally to metal casing 4 to surround cover 8 and opening 10; a rigid, contoured, strip-down plug 23 housable inside casing 4 through opening 10; and a positioning and retaining assembly 24 connectable to locating and support assembly 22 to lock plug 23 in the desired position inside casing 4 and permit pour-in of propellant 2 into the space left clear by strip-down plug 23.

As shown in Figure 3, locating and support assembly 22 comprises a frame 25, which is fitted integrally to an outer surface of cover 8 and lateral wall 5, forms an axial extension of wall 5, and terminates with a connecting plate 26 perpendicular to axis 3.

Positioning and retaining assembly 24 is fitted by screws 27 to plate 26, and comprises a box spacer body 28 screwed to plate 26; and a cup-shaped body 29 having a cylindrical lateral wall 31, and a bottom wall 30 welded to the free end of spacer body 28 and facing plate 26. Lateral wall 31 is fitted at its free end with a supporting plate 33 having an opening 34 coaxial with axis 3 and aligned with a further opening 35 formed through bottom wall 30 and also coaxial with axis 3. Opening 35 is surrounded by a telescopic collar 38 coaxial with axis 3 and comprising a first portion resting on plate 26, and a second portion connected to plate 26 and projecting inside casing 4 through opening 10 to form part of a known device 40, not described in detail, for tensioning a seal 41 isolating propellant 2. Seal 41 is housed partly inside casing 4, and partly extends to cover the inner surface of telescopic collar 38.

Plate 33 supports and retains strip-down plug 23, which comprises a number of forming fins 43 (only one shown in Figure 3) selectable according to the desired geometry of cavity 13; and a cylindrical tubular locating body 44 coaxial with axis 3. Tubular body 44 comprises an end portion 45 connectable to a cap 46 closing opening 9; and an opposite end portion 47 projecting from plate 33 and defining a radial locator for fins 43.

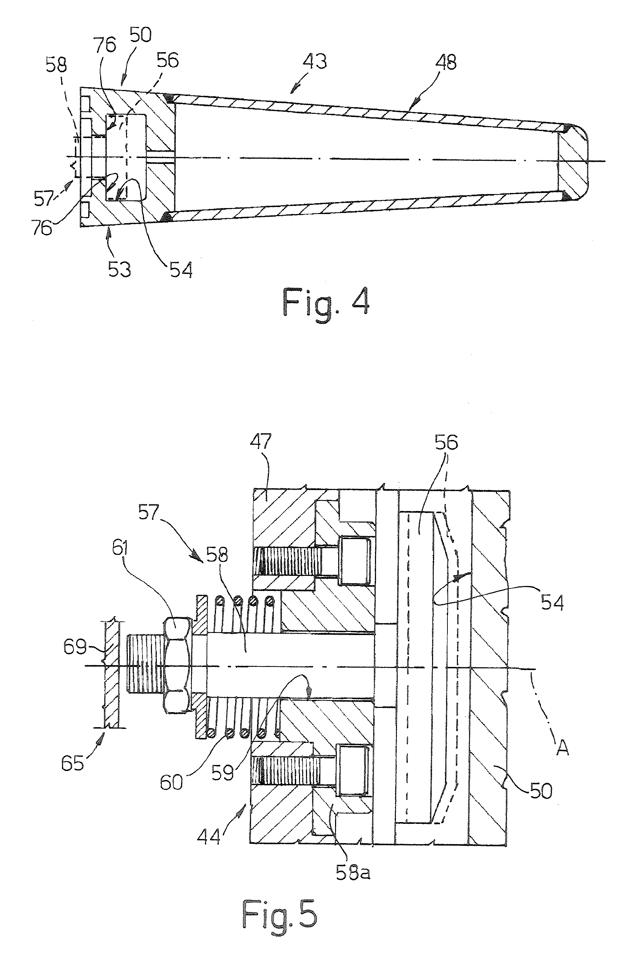

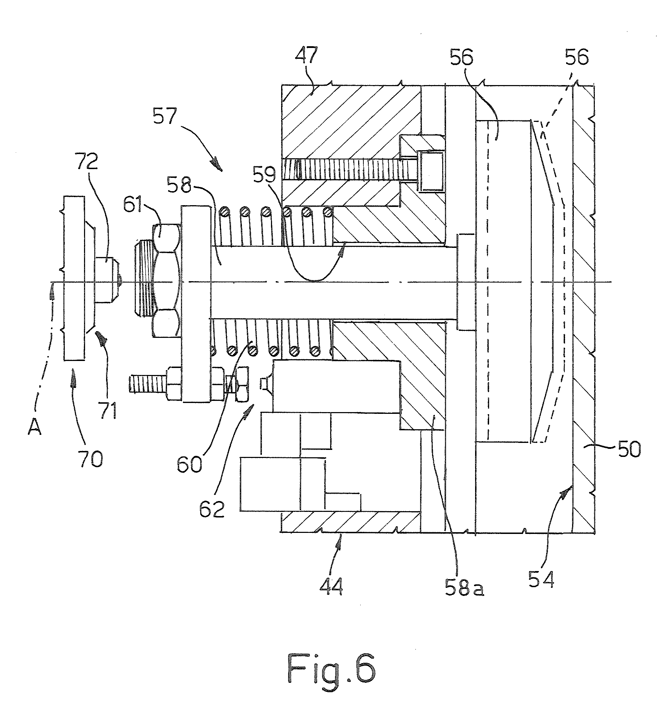

Each fin 43 is sized transversely to be insertable inside casing 4 through openings 34 and 35 and collar 38, and, in the example described, comprises a radial box forming portion 48 complementary in shape to that of lateral recesses 18, as shown in Figure 4; and an L-shaped stem 49 for connection to plate 33. More specifically, stem 49 comprises an axial portion 50 aligned with box portion 48; and a radial portion 51 having a number of through holes engaged loosely, in use, by respective screws 52 for connection to plate 33. As shown in Figure 3 and particularly in Figure 4, a peripheral axial portion of stem 49 forms part of an axial shank 53, in which is formed an axial groove 54 open, in use, towards axis 3 and having a substantially C-shaped cross section (Figure 4). Each groove 54 is sized to be engaged, in use, in axially sliding manner by the retaining heads 56 of a row of mushroom- or hammer- shaped bodies 57. Each body 57 comprises a radial stem 58, which engages in sliding manner a bush 58a inserted inside a radial opening 59 in tubular body 44, and projects inside tubular body 44. The portion of stem 58 extending inside tubular body 44 is fitted with a compression spring 60 forced between relative bush 58a and a stop nut 61 screwed to an end portion of stem 58 to keep head 56 in a withdrawn position (Figures 3, 5, 6). With reference to Figure 6, each stem 58 is fitted with a known position detecting device 62 for detecting the position of head 56 in the slide direction A of stem 58.

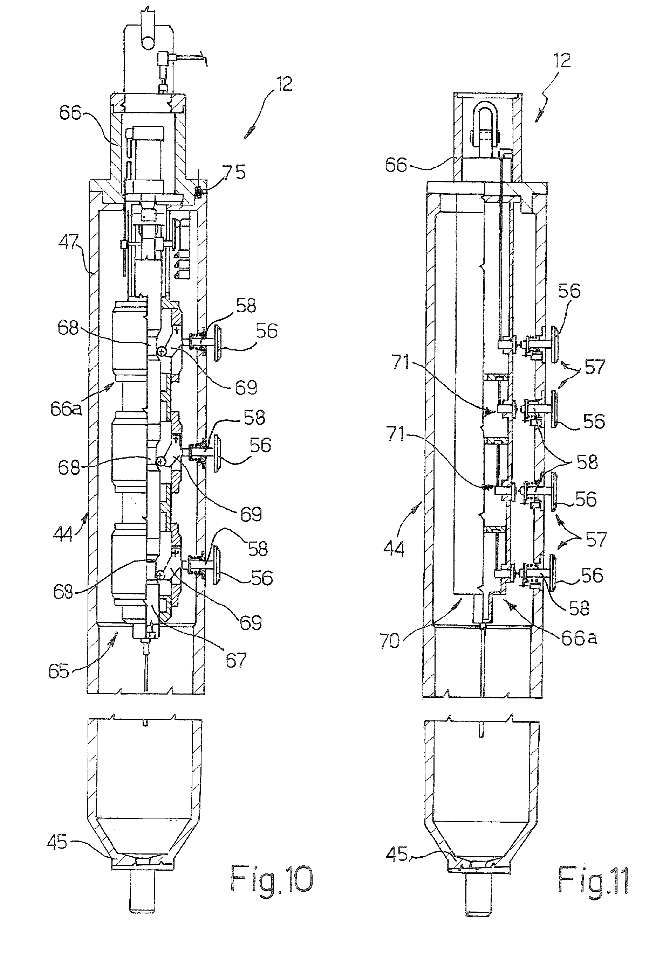

Bodies 57 in each row of bodies 57 are movable between said withdrawn position and an extracted position (shown by the dash line in Figures 5 and 6) by an actuating device 65 housed in tubular body 44. As shown in Figure 3 and particularly in Figure 10, actuating device 65 is mechanical, and comprises a cap 66 fitted integrally and removably to the end of tubular body 44 extending through opening 34; and an elongated structure 66a extending axially inside body 44 and connected in known manner to cap 66. Structure 66a supports a guide, along which runs axially a slide 67 having a number of axially spaced cams 68. Each cam is associated with a respective cam-follower 69 (Figures 3 and 5) which is hinged to structure 66a and rolls along respective cam 68 and against a free end of stem 58 of a respective mushroom-shaped body 57 to exert thrust, in use, in opposition to that of relative spring 60, and so push relative mushroom-shaped body 57 into the extracted position.

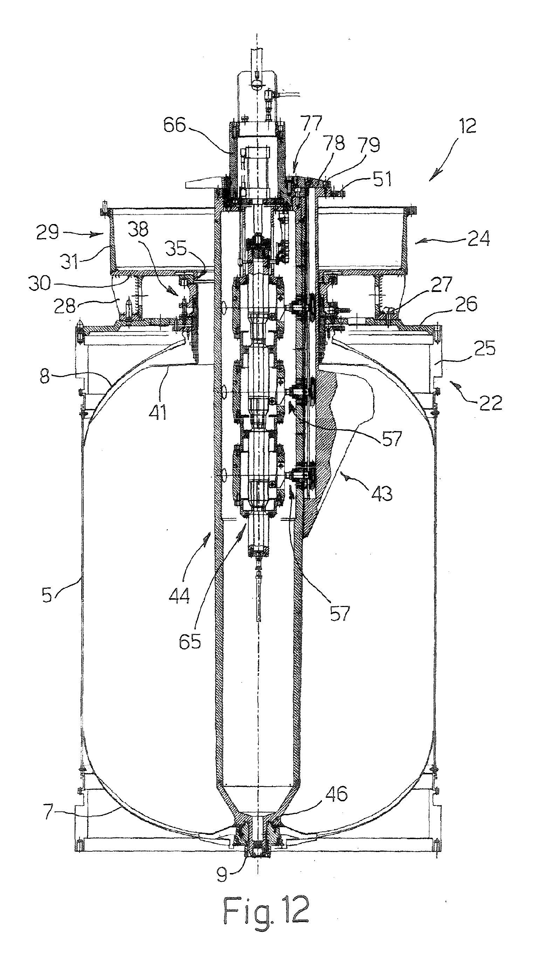

The Figure 6 and 11 variation shows an actuating device 70, which differs from device 65 solely by each cam and cam-follower assembly 68, 69 being replaced with a hydraulic linear actuator 71 located next to relative mushroom-shaped body 57, and having a movable member 72 (Figure 6) coaxial with and acting directly on stem 58.

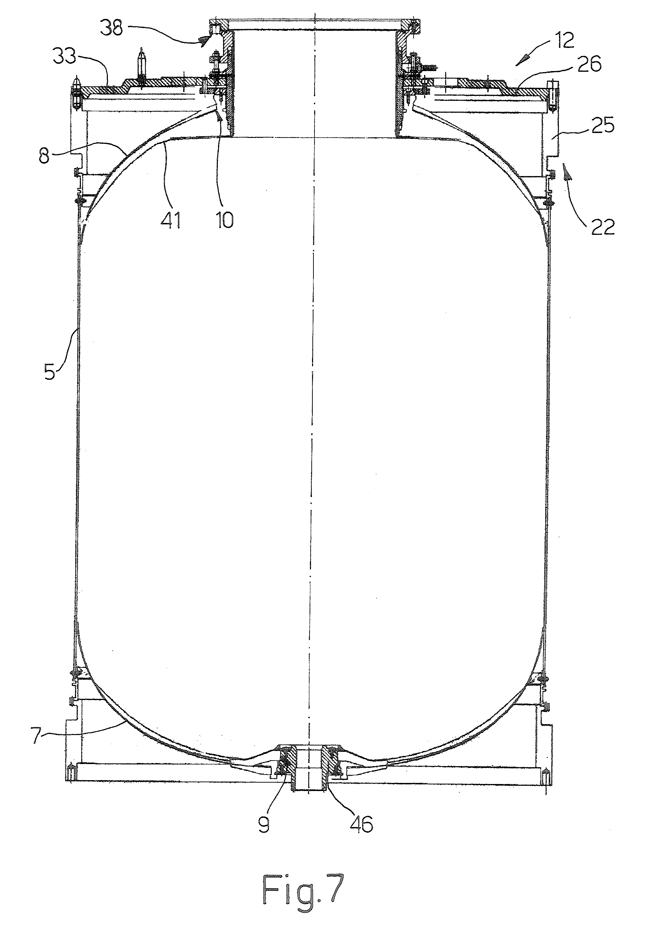

The way in which propellant 2 is fed into tank 1, and inner cavity 13 is formed inside propellant 2, will now be described with reference to Figures 7 to 16, and as of the condition shown in Figure 7, in which cap 46 closes opening 9, opening 10 is engaged by telescopic collar 38 to tension seal 41 isolating the propellant from opening 10, actuating devices 65, 70 (Figures 10 and 11) are extracted from tubular body 44, and tubular body 44 and fins 43 are disconnected from one another and arranged outside casing 4.

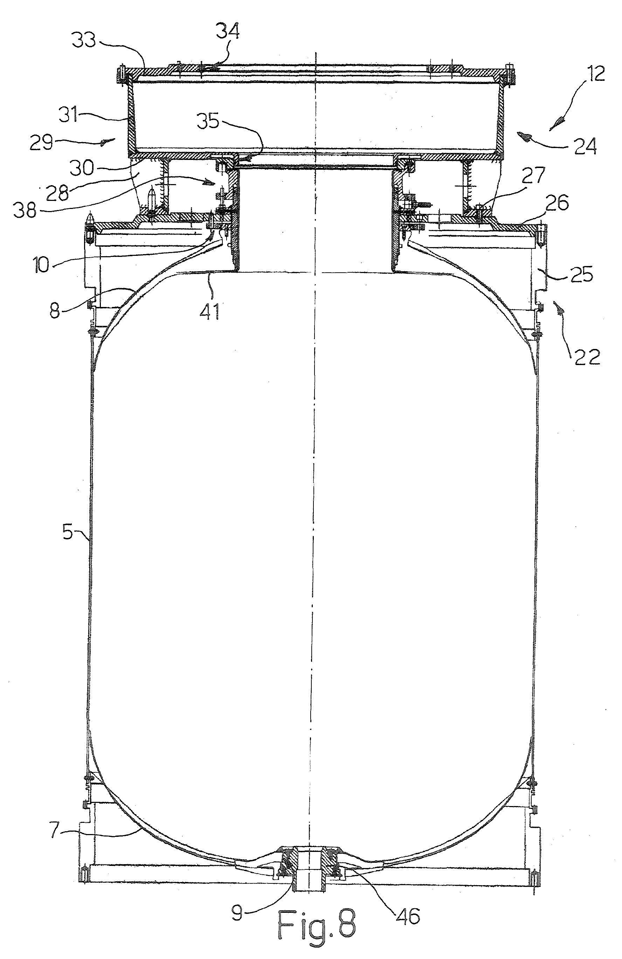

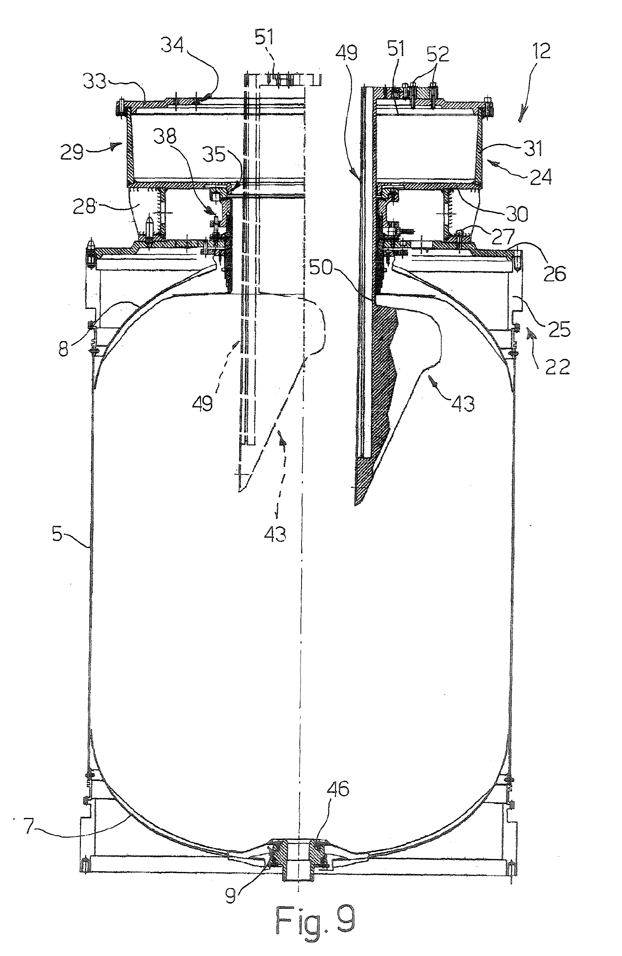

As of the above condition, spacer body 28, fitted integrally with cup-shaped body 29, is fitted to plate 26 and secured by screws 27; plate 33 for supporting fins 43 is then positioned on and connected to cup-shaped body 29, as shown in Figure 8; and fins 43 are then taken one by one and inserted successively inside casing 4 through openings 34 and 35 and telescopic collar 38 (Figure 9). Each fin 43 is first inserted axially, is then moved radially to rest portion 51 of stem 49 on plate 33, and is then set to a predetermined angular position and fastened to plate 33 by screws 52, which engage respective through holes in portion 51 with a certain amount of radial clearance to permit fine radial adjustment of fin 43 later (Figure 9). Screws 52 are also tightened to permit a small amount of axial movement of fins 43 with respect to plate 33, i.e. to also leave a certain axial clearance enabling fine axial adjustment later on, as described in detail below.

Once fins 43 are all inserted inside casing 4 and fastened to plate 33, they are maintained in this rough position, and actuating device 65 or 70 (Figure 10 or 11) is inserted inside tubular body 44 so that cap 66 engages the end of portion 47, at which point, cap 66 is fastened by screws 75. In this position, cam-followers 69, when using mechanical device 65 (Figure 10), or actuators 71, when using hydraulic device 70 (Figure 11), are each aligned with the free end of stem 58 of a respective mushroom-shaped body 57. At this point, actuating device 65, 70 is operated to move mushroom-shaped bodies 57 into the extracted position shown by the dash line in Figures 5 and 6; portion 45 of tubular body 44 is then inserted inside casing 4, through openings 34 and 35 and collar 38, and is positioned coaxially with axis 3; tubular body 44 is then rotated about axis 3 to align each row of mushroom-shaped bodies 57 with groove 54 of a respective fin 43, and is moved axially to ease head 56 of each mushroom-shaped body 57 inside relative groove 54, and so that portion 45 engages and rests on cap 46, as shown in Figure 3. During insertion, as described above, any angular position errors of fins 43 are corrected.

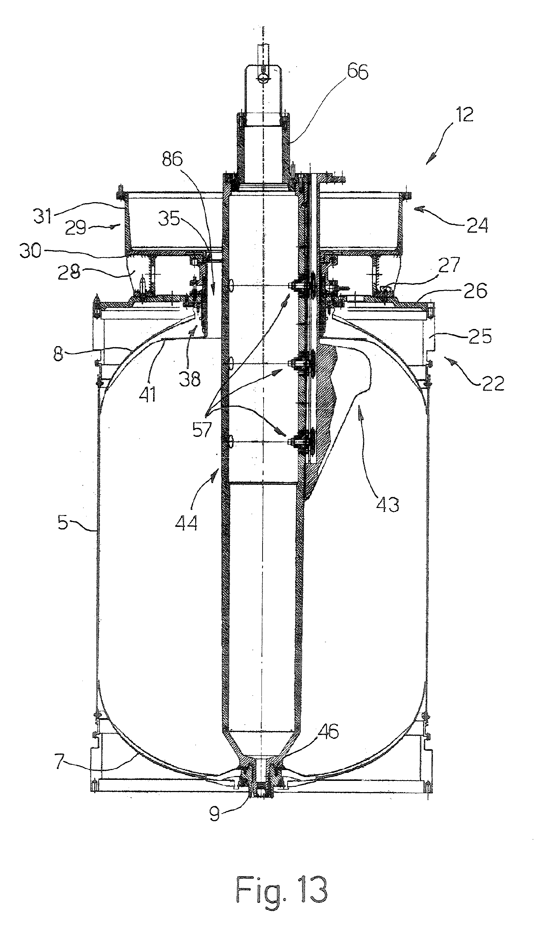

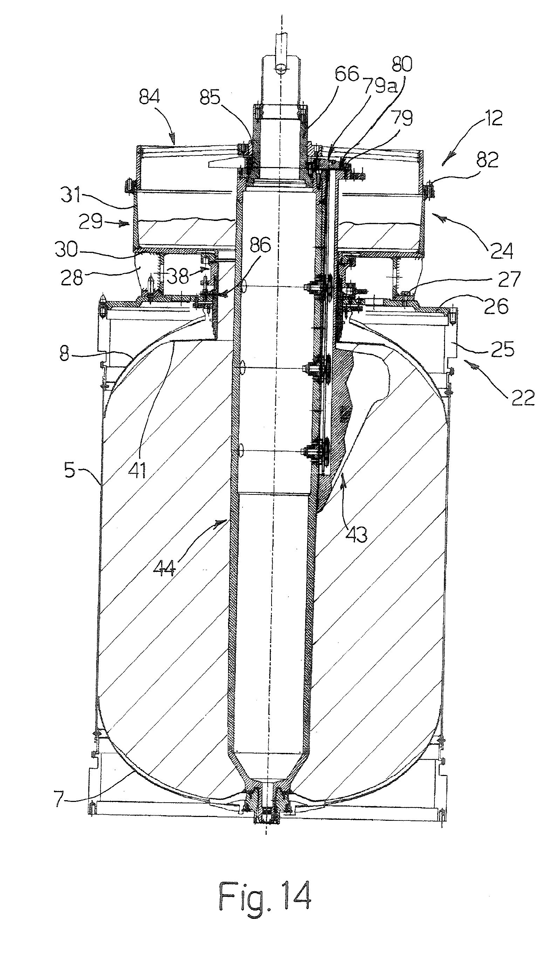

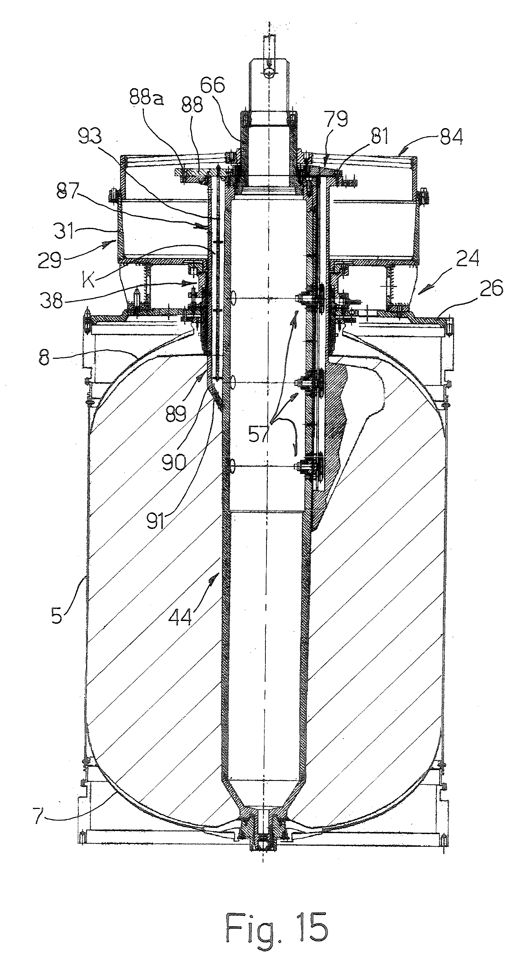

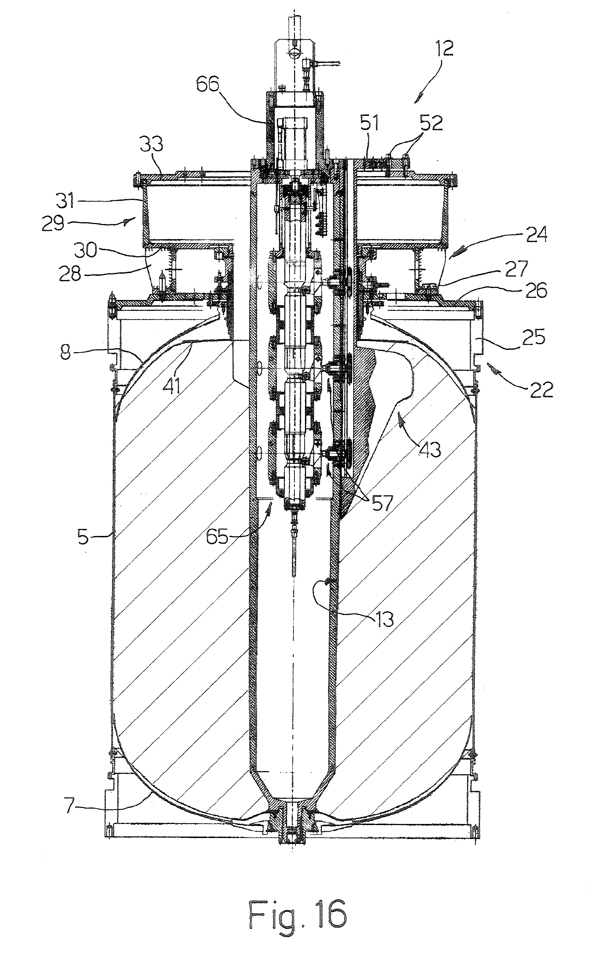

At this point, actuating device 65, 70 is deactivated, and mushroom-shaped bodies 57 are moved by relative springs 60 into the withdrawn position, in which heads 56 first come to rest on the shoulders 76 of groove 54, as shown in Figures 4, 5 and 6, and then move fins 43 radially (this is permitted by the radial clearance of screws 52 inside the respective holes) towards tubular body 44, and hold them firmly against the outer surface of tubular body 44. At this point, cap 66, coaxial with axis 3, is fitted with a body 77 for axially positioning and retaining fins 43, as shown in Figure 12. Body 77 is star-shaped, and comprises, for each fin 43, a respective arm 78 projecting from tubular body 44 and over respective portion 51. Each arm 78 is then fastened to relative portion 51 by partly tightening axial screws 79; screws 52 and plate 33 are then removed, and the corresponding actuating device 65, 70 is again activated to ease mushroom-bodies 57 back into the extracted position; and screws 79 are then tightened to move fins 43 axially so that portions 51 rest against corresponding arms 78. At this transient stage, bodies 57 provide simply for guidance. Once screws 79 are tightened, actuating device 65, 70 is again deactivated, and fins 43 are again forced against the outer surface of tubular body 44 by mushroom-shaped bodies 57. Fins 43 are therefore connected integrally to tubular body 44 alone, and are each set to a predetermined axial and angular work position (Figure 12). At this point, screws 79 are removed, axial positioning and retaining body 77 is first removed, and cap 66 and actuating device 65, 70 then withdrawn. Cap 66 is then replaced to close the tubular body, as shown in Figure 13, and a star-shaped retaining body 79a, having seals 80, is fitted and locked to cap 66, and is itself fitted with fins 43 by means of screws 79 (Figure 14). Once the fins are fitted, cup-shaped body 29 is fitted by means of screws 82 with a centring device 84, a fastening collar 85 of which is fitted onto cap 66, over retaining body 79a, as shown in Figure 14. At this point, the more or less liquid propellant is fed into cup-shaped body 29, from where it is allowed to flow into casing 4 along a number of axial channels 86 - only one shown in Figures 13 and 14 - bounded laterally by adjacent fins 43. The propellant is fed in to completely fill tank 1 and channels 86, and part of cup-shaped body 29, as shown in Figure 14. At this point, centring device 84 is removed and replaced with a forming device 87 (Figure 15) comprising a fastening collar 88 fitted to cap 66 by screws 89a; and, for each channel 86, a hollow, elongated, circular partition 89 connected integrally to collar 88 and terminating, at the opposite end to collar 88, with a pointed portion 90 having a number of adjacent axial through holes 91. Forming device 87 is moved axially to insert pointed portions 90 inside the propellant inside cup-shaped shaped body 29, and to slide each partition 89 axially inside the relative channel 86. As partitions 89 are slid in, the propellant flows through holes 91 to gradually fill the gap K between each partition 89 and tubular body 44, and to enclose a ribbed rod 93 housed inside gap K and connected integrally to collar 88. Once the partitions are inserted, centring device 84 is replaced, and the propellant heat treated in known manner. After heat treatment, centring device 84 is removed, and forming device 87 extracted. When extracting forming device 87, the portions of propellant between partitions 89 and tubular body 44 and anchored to relative ribbed rods 93 are inevitably also extracted, thus clearing channels 86, as shown in Figure 16, so that each channel 86 forms a relative dead channel 11 of cavity 13. Centring device 84 and retaining body 79a are then removed, cap 66 is replaced and actuating device 65, 70 reinserted, plate 33 for supporting fins 43 is replaced, and fins 43 are fitted back onto plate 33 by means of screws 52, as shown in Figure 16. At this point, actuating device 65 is activated to move mushroom-shaped bodies 57 into the extracted position, and tubular body 44 is then withdrawn to clear a through channel along which fins 43 are withdrawn successively, keeping them parallel to themselves, before being extracted axially through collar 38 to clear cavity 13. Once the fins are extracted, positioning and retaining assembly 24 and locating and support assembly 22 are removed.

Tool 12 described therefore provides for forming, in the propellant in tank 1, any type of cavity, even having underside recesses, and in particular a cavity of radial dimensions greater than the radial dimension of the opening through which the propellant is fed. This is substantially made possible by using a rigid, strip-down plug, the rigid component parts of which may, above all, be selected from a number of rigid parts of any shape and size, can be inserted successively inside the casing, and, once inside the casing, can be set and locked releasably in predetermined fixed positions.

At the same time, cavities of any shape and size are obtained simply and relatively cheaply, by virtue of the plugs and the tool 12 described comprising a small number of component parts that are easy to make and assemble, and by virtue of the tool itself and the plug fastening member being universal, i.e. usable with any type of forming fin, and therefore for forming any type of cavity.

Clearly, changes may be made to plug 23 and to tool 12 as described herein without, however, departing from the protective scope as defined in the accompanying Claims. In particular, plug 23 may differ from the one described by way of example, while still comprising rigid component parts than can be assembled and disassembled inside the tank working from the outside.

## Claims

1. A method of distributing propellant inside a solid-propellant casing having an end opening; the method comprising the steps of pouring the propellant inside said casing, and setting the propellant to form, in the propellant, a cavity communicating with said end opening; said cavity being formed using a rigid, strip-down forming member comprising at least one locating member, and a number of forming bodies separate from one another and from the locating member; the method comprising the steps of stripping down the forming bodies and the locating member outside the casing; successively inserting the forming bodies and the locating member inside said casing through said end opening; positioning the locating member and the forming bodies inside said casing; releasably locking the locating member with respect to the casing, and the forming bodies with respect to the locating member, prior to pouring in said propellant; and, once the propellant has set, stripping down the rigid forming member, and successively withdrawing the locating member and the forming bodies through said end opening.

2. A method as claimed in Claim 1, **characterized in that** said locating member is inserted after all the forming bodies have been inserted inside said casing.

3. A method as claimed in Claim 1 or 2, **characterized in that**, following insertion, the locating member is positioned and locked coaxially with an axis of the casing, and the forming bodies are arranged angularly about said locating member to form a number of radial cavities, each of a dimension, measured perpendicularly to said axis, greater than the dimension of said end opening measured in the same direction.

4. A method as claimed in Claim 2 or 3, **characterized in that** said locating member is locked by inserting an end portion of said locating member inside a seat on the casing; fitting a positioning and retaining assembly in a fixed position to the casing; and releasably locking to said positioning and retaining assembly a portion of said locating member projecting outside the casing through said end opening.

5. A method as claimed in Claim 4, **characterized in that** insertion of each of said forming bodies comprises a first axial movement of said forming body through said end opening; and a second radial movement of the forming body away from the axis of the casing.

6. A method as claimed in any one of the foregoing Claims, **characterized in that** positioning each of said forming bodies comprises a pre-positioning or rough positioning step in an axial direction and a radial direction; and a fine adjustment step in both said directions.

7. A method as claimed in Claim 6, **characterized in that** the angular pre-positioning step comprises fitting a fixed support assembly to said casing; and fitting a connecting base of each said forming body to said fixed support assembly with a certain amount of radial and axial slack.

8. A method as claimed in Claim 7, **characterized in that** the angular pre-positioning step comprises the further steps of fitting radial pin means, carried by said locating member, inside axial retaining seats carried by each of said forming bodies; and translating said pin means inside said retaining seats when inserting said locating member.

9. A method as claimed in Claim 7 or 8, **characterized in that** the fine adjustment step in the radial direction is performed by forcing each of said forming bodies into contact with said locating body.

10. A method as claimed in one of Claims 7 to 9, **characterized in that** the fine adjustment step in the axial direction comprises the steps of fitting an axial stop portion to said locating body; fitting each of said forming bodies to a respective axial guide; and translating each of said forming bodies along said guide into contact with said stop portion.

11. A method as claimed in any one of the foregoing Claims, **characterized in that** said forming bodies are locked in contact with said locating member by exerting forcing thrusts on points of said forming body spaced apart in a direction parallel to an axis of said casing.

12. A method as claimed in Claim 11, **characterized in that** each of said forcing thrusts is achieved by interposing between said locating member and each of said forming bodies a respective forcing member maintained in a gripping position by an elastic member.

13. A method as claimed in Claim 12, **characterized in that** said forming bodies are disconnected from said locating member by exerting on each of said forcing members a counter-thrust in opposition to that exerted by the respective said elastic member.

14. A method as claimed in Claim 13, **characterized in that** said locating member comprises a tubular body, and said counter-thrust is exerted from inside said tubular body.

15. A method as claimed in Claim 14, **characterized in that** said counter-thrust is exerted by housing inside the tubular locating member a mechanical or hydraulic actuating device activatable from outside.

16. A method as claimed in any one of the foregoing Claims, **characterized in that**, after pouring and before setting said propellant, a number of elongated, hollow further forming bodies, having lateral openings, are inserted about said locating member and between said forming bodies.

17. A method as claimed in Claim 16, **characterized in that** said hollow further forming bodies are inserted axially inside said propellant, so that, as they are inserted axially, part of said propellant enters said hollow further forming bodies.

18. A method as claimed in Claim 17, **characterized in that** said hollow further forming bodies are extracted after said propellant sets and before said forming bodies and said locating member are extracted, so as to form, about said locating member and between adjacent said cavities, respective further cavities open towards the axis of said casing.

19. A tool for filling a solid-propellant tank using the method as claimed in any one of Claims 1 to 18; the tool comprising a locating member extending along an axis and which is inserted inside a substantially cylindrical casing of said tank through an end opening in the casing; a number of forming bodies separate from one another and from said locating member; releasable connecting means connectable to said casing to keep said locating member, in use, in a position coaxial with an axis of said tank; and releasable positioning and retaining means for releasably positioning and retaining said forming bodies about said locating member and in respective angular work positions, to form a rigid forming member of outer radial dimensions greater than those of said end opening.

20. A tool as claimed in Claim 19, **characterized in that** said releasable connecting means comprise fastening means insertable inside a seat on said casing, and for housing one end of said locating member; and a positioning assembly connectable to said casing and having a fastening collar which is fitted to a portion of said locating member projecting, in use, outside the casing through said end opening.

21. A tool as claimed in Claim 19, **characterized in that** said positioning and retaining means comprise angular and axial pre-positioning means for positioning each of said forming bodies in a respective intermediate position close to said work position, and allowing the forming bodies to be moved into said work positions; and fine positioning means for positioning and maintaining said forming bodies in said work positions.

22. A tool as claimed in Claim 21, **characterized in that** each of said forming bodies comprises a connecting base; and **in that** said pre-positioning means comprise a fixed support assembly fittable integrally to said casing, and connecting means for connecting each said base to said fixed support assembly with a certain radial and axial slack.

23. A tool as claimed in Claim 21 or 22, **characterized in that** said angular pre-positioning means also comprise, for each said forming body, at least one pair of radial pins carried by said locating member and which slide in respective axial retaining seats carried by each of said forming bodies.

24. A tool as claimed in Claim 21, **characterized in that** said fine axial adjustment means comprise axial guide means for guiding each of said forming bodies in a direction parallel to said axis; an axial stop body carried by said locating member in an axially fixed position; and actuating and locking means for moving and retaining each of said forming bodies into/in contact with said axial stop body.

25. A tool as claimed in Claim 21, **characterized in that** said fine radial positioning means comprise radial forcing means for forcing each of said forming bodies into contact with said locating member.

26. A tool as claimed in Claim 25, **characterized in that** said radial forcing means comprise, for each said forming body, at least one movable retaining member connected releasably to the relative said forming body, and connected in sliding manner to said locating member; elastic means being interposed between said retaining member and said locating member to keep the retaining member in a withdrawn position in which it pushes the relative forming body against said locating member; actuating means being associated with said locating member to exert a counter-thrust in opposition to the thrust exerted by said elastic means.

27. A tool as claimed in Claim 26, **characterized in that** said radial forcing means comprise a number of said retaining members.

28. A tool as claimed in Claim 26 or 27, **characterized in that** each of said retaining members is mushroom-shaped, and comprises a head housed inside an axial retaining seat formed in the relative said forming body, and a stem fitted in radially sliding manner to said locating member; said elastic means comprising a compression spring surrounding said stem.

29. A tool as claimed in one of Claims 26 to 28, **characterized in that** said actuating means comprise, for each said retaining member, a hydraulic linear actuator carried by said locating member.

30. A tool as claimed in one of Claims 26 to 28, **characterized in that** said actuating means comprise a respective cam and cam follower assembly for each said retaining member.

31. A tool as claimed in one of Claims 26 to 30, **characterized in that** said locating member comprises a tubular body; said actuating means being housed in the tubular body, and said retaining members extending radially through said tubular body.

32. A tool as claimed in Claim 31, **characterized by** comprising a supporting structure for supporting said actuating means; said supporting structure being housed at least partly in said tubular body, and being fitted extractably to the tubular body.

33. A tool as claimed in any one of Claims 19 to 33, **characterized by** also comprising a number of elongated, hollow further forming bodies; and releasable connecting means for connecting said hollow further forming bodies in positions alternating with said forming bodies.

34. A tool as claimed in Claim 33, **characterized in that** each of said hollow further forming bodies defines with said locating member a respective elongated chamber; at least one through opening being formed in each of said hollow further forming bodies to allow the propellant, in use, to flow into the respective said chamber.

35. A tool as claimed in Claim 33 or 34, **characterized by** comprising, for each said hollow further forming body, a respective fastening rod connected integrally to said connecting means and having a rough portion housed in the relative said chamber.

36. A tool as claimed in any one of Claims 19 to 35, **characterized in that** said forming bodies are selectable from a number of forming bodies of different shape and geometry and having the same shank.
